# EUROPÄISCHE PATENTSCHRIFT

(11) **EP 0 626 196 B1**
(45) Veröffentlichungstag und Bekanntmachung des Hinweises auf die Patenterteilung: **27.01.1999**
(21) Anmeldenummer: 94107189.6
(22) Anmeldetag: 07.05.1994
(51) Int. Cl.: B01J 4/00, B01J 8/24

(54) **Vorrichtung und Verfahren zum Dosieren von in einem Gas/Feststoff-Strom vorliegenden Feststoff aus einem Wirbelbett**
Device and process for dosing a solid suspended in a gas-solids stream from a fluidised bed
Dispositif et procédé de dosage d'un solide en suspension dans un courant de gaz-solides extrait d'un lit fluidisé

(30) Priorität: 25.05.1993 CH 1565/93
(43) Veröffentlichungstag der Anmeldung: 30.11.1994
(73) Patentinhaber: BÜHLER AG, 9240 Uzwil (CH)
(72) Erfinder: Goedicke, Frank, Dr., CH-9527 Niederhelfenschwil (CH)
(74) Vertreter: Révy von Belvárd, Peter

(56) Entgegenhaltungen:
- EP-A- 0 087 039
- EP-A- 0 531 758
- PATENT ABSTRACTS OF JAPAN vol. 9, no. 301 (C-316) (2024) 28. November 1985 & JP-A-60 139 330 (MITSUBISHI JUKOGYO K.K.) 24. Juli 1985

## Beschreibung

Die Erfindung bezieht sich auf eine Vorrichtung zum Dosieren von in einem Gas/Feststoff-Strom vorliegenden Feststoff nach dem Oberbegriff des Anspruchs 1, sowie auf ein Verfahren zum Dosieren eines solchen nach dem Oberbegriff des Anspruchs 7.

Für unterschiedliche Bereiche der Verfahrenstechnik ist die Genauigkeit des Einstellens von vorgegebenen Feststoffströmen als Masse oder Volumen von grosser Bedeutung, wobei die Anforderungen daran verschieden hoch sind. Feststoff-Teilchen, die gegebenenfalls in einen Reaktionsraum eingespeist werden sollen, oder die in genau kontrollierbaren Mengen anderen, vorgegebenen Mengen an Teilchen, Flüssigkeiten oder Gasen zugemischt werden sollen, werden dazu - u.a. um die Fliessfähigkeit zu erhöhen - vorteilhafterweise, insbesondere wenn sie zu Agglomerationsbildung neigen, in einer Wirbelbettapparatur fluidisiert.

Das Verhalten des aus einer Wirbelschicht ausfliessenden Gas/Feststoff-Stroms, die Art der möglichen Strömungszustände mit ihrer Neigung zur Destabilisierung und Massnahmen, einer solchen entgegenzuwirken, wurden verschiedentlich sowohl theoretisch als auch empirisch untersucht. In gleicher Weise wurde der Einfluss von Ausflussöffnungen bzw. von Ausflussdüsen auf den Strömungszustand des aus der Wirbelschicht ausfliessenden Gas/Feststoff-Stroms untersucht. Der aus einer Öffnung in der Wirbelbettapparatur ausfliessende Gas/Feststoff-Strom ist bis zu einem bestimmten Öffnungsdurchmesser im wesentlichen durch die Wirbelschichthöhe oberhalb der Öffnung und durch den Durchmesser der Düse bestimmt. Durch das Verhältnis des Durchmessers der Ausflussdüse zu deren Länge wird der Gasanteil im Gas/Feststoff-Strom bestimmt (L.Massimilla; "Fluidization", Academic Press, New York, 1971).

In der EP-A-531 758 wird eine Möglichkeit beschrieben, über zusätzliche Begasung im Bereich der Ausflussöffnung sowohl Durchsatz als auch Homogenität des ausfliessenden Feststoffs zu beeinflussen, wobei einerseits mittels Fluidisierungsdüsen, die unmittelbar neben der Auslassöffnung in die Wirbelbettapparatur münden, die Bildung von Schüttgutbrücken und der Einzug von Blasen unterbunden werden kann, und wobei andererseits mittels einer als Hohlkörper ausgebildeten Auslassdüse, über die der ausfliessende Gas/Feststoff-Strom begast werden kann, sowohl der Durchsatz des Feststoffes als auch die Homogenität des auslaufenden Gas/Feststoff-Stroms einstellbar sind. Gerade diese letztere Massnahme zeichnet sich dadurch aus, dass sie eine rasche Regelung des Feststoffmassendurchsatzes erlaubt. Die Voraussetzungen und die Durchführung einer solchen Regelung - auch im Zusammenhang mit einer Grob- bzw. Vorregelung über die Höhe der Wirbelschicht bzw. über die Einspeisung von Feststoff in dieselbe - sind in der EP-A-531 758 beschrieben und gelten im Rahmen dieser Anmeldung als geoffenbart.

Die in der EP-A-531 758 beschriebene Regelung des Massendurchsatzes des ausfliessenden Feststoffes und der Einstellung der Homogenität des ausfliessenden Gas/Feststoff-Stroms beruht dabei auf dem Prinzip von Differenzdruckmessungen, wobei Drucksensoren an verschiedenenen Punkten der Wirbelbettapparatur vorgesehen werden. Zur Steuerung des Massendurchsatzes des ausfliessenden Feststoffes wird dabei im wesentlichen auf den hydrostatischen Druck innerhalb der Wirbelschicht abgestellt. Es ist offensichtlich, dass eine Regelung, wie in der EP-A-531 758 beschrieben, nur dann möglich ist, wenn - entsprechend den unterschiedlichen Feststoffen, wobei sich dies sowohl auf deren chemische wie auch auf deren physikalische Unterscheidbarkeit bezieht - Kalibrierkurven zur Verfügung stehen, die den jeweiligen Messwerten zugeordnet werden können. Als nachteilig ist dabei anzusehen, dass einerseits die Aufnahme von Kalibrierkurven zeitaufwendig ist und andererseits ein ganzes Spektrum von solchen Kalibrierkurven zur Verfügung stehen müsste, da sich die Parameter des ausfliessenden Gas/Feststoff-Stroms prozessbedingt ändern können. Bei dem beschriebenen Verfahren wird allerdings der eigentlich wesentliche Punkt des Verfahrens, nämlich die Abgabe des Feststoffs, sei es deren Einbringen in einen Reaktionsraum oder das Zuführen in eine Mischvorrichtung, nicht beachtet. So kann beispielsweise im Reaktionsraum durch Erzeugen von Gas Überdruck erzeugt werden, es kann sich die Dichte des Gas/Feststoff-Stroms ändern, Parameter, die - da durch periphere Bedingungen bestimmt - bei dem in der EP-A-531 758 beschriebenen Verfahren nicht berücksichtigt werden und - wie oben dargestellt - ausschliesslich über aufwendig zu erstellende, sämtliche Verfahrens- und Peripherieparameter berücksichtigende Kalibrierkurven erfassbar wären.

Die Erfindung hat sich demgegenüber die Aufgabe gestellt, eine Vorrichtung und ein Verfahren bereitzustellen, durch welche eine Steuerung des aus einer Wirbelbettapparatur ausfliessenden Feststoffstroms möglich wird unter Berücksichtigung der Daten des gewünschten Prozesses und zwar unabhängig von Art und Menge des Feststoffes, ohne dass dazu die Erstellung von aufwendigen Kalibrierkurven erforderlich ist.

Dies gelingt mittels einer Vorrichtung und eines Verfahrens, unter Verwirklichung der kennzeichnenden Merkmale des Anspruchs 1 bzw. des Anspruchs 7.

Dadurch, dass Mittel zum Einstellen der zwischen Auslassöffnung und Endbereich der Auslaufleitung wirksamen treibenden Kraft vorgesehen sind, kommen auch die den Prozess bestimmenden bzw. durch diesen bestimmten Daten zum Tragen. Es wird also nicht der hydrostatische Druck in der Wirbelschicht bestimmender Parameter, sondern das Druckgefälle, das zwischen der Höhe der Auslassöffnung und einem durch die Art des nachfolgenden Prozesses bestimmten Punkt herrscht, der jedenfalls dem Endbereich der Auslaufleitung zuzuordnen ist, gegebenenfalls aber auch in einem Reaktionsraum liegen kann. Dieses Druckgefälle bestimmt die sogenannte treibende Kraft, über deren Einstellung der ausfliessende Feststoff-Massenstrom unabhängig vom Inhalt der Wirbelschicht und unabhängig von Art und Menge des jeweils vorliegenden Feststoffs konstant gehalten bzw. entsprechend vorgegebenen Dosierrezepturen eingestellt werden kann.

Vorteilhafte Weiterbildungen werden durch die kennzeichnenden Merkmale der abhängigen Ansprüche beschrieben.

Bei dem in der EP-A-531 758 beschriebenen Verfahren soll zeitkonstantes Dosieren des auslaufenden Feststoffs erzielt werden. Dies wird dadurch zu erreichen gesucht, dass die Höhe der Wirbelschicht und/oder der Druck oberhalb der Wirbelschicht konstant gehalten wird, wobei eine gleichgerichtete Wirkung dieser Massnahmen erfolgt. Schwankungen - auch solche, die sich aufgrund der Einspeisung des Feststoffes über beispielsweise eine Dosierschnecke ergeben - werden hierbei entweder durch Nachkorrigieren der Wirbelschicht-Höhe oder durch Änderung des über der Wirbelschicht herrschenden Druckes korrigiert. Demgegenüber zielt das erfindungsgemässe Verfahren und die erfindungsgemässe Vorrichtung auf eine ganzheitliche Beeinflussung bei frei wählbaren Vorgaben. Abgestellt wird auf die treibende Kraft, wobei in aufeinander abgestimmter Weise - da hier im Gegensatz zu dem oben beschriebenen Verfahren auf die gezielt gegengerichtete Wirkung der Massnahmen geachtet wird - auf die diese Kraft bestimmenden Komponenten Einfluss genommen wird.

Wird zusätzlich im Bereich einer der Auslassöffnung zugeordneten Begasungsdüse Gas dem ausfliessenden Gas/Feststoff-Strom zugeführt, so werden eher geringfügige, rasche Schwankungen des Feststoff-Massendurchsatzes korrigierbar und die Homogenität desselben beeinflussbar. Über Fluidisierungsdüsen, die unmittelbar im Bereich der Auslassöffnung in die Wirbelbettapparatur münden, kann der an sich diffizile Einzugsbereich kontrolliert werden, beispielsweise in bezug auf Porosität und Strömungszustand der dort vorliegenden bzw. in die Auslassöffnung ausfliessenden Gas/Feststoff-Gemischs.

Ist die Wirbelbettapparatur im Bereich ihres Bodens trichterförmig ausgebildet, so ergeben sich zusätzliche Möglichkeiten der Einflussnahme auf den aus der Wirbelschicht ausfliessenden Gas/Feststoff-Strom. Einerseits kann der in einer solchen Wirbelbettapparatur vorliegende Feststoff gezielt nur teilweise fluidisiert werden, was sowohl über die Menge des oberhalb des fluidisierten Wirbelschicht-Bereichs als Schüttung vorliegenden Feststoffs geschehen kann bzw. über die Einstellung des Gas-Drucks oberhalb dieser Schüttung, als auch über eine bereichsweise vorzunehmende Einstellung von Menge bzw. Geschwindigkeit des Fluidisierungsgases. Letzteres ist besonders effektiv möglich, wenn die Einlassleitungen für das Fluidisierungsgas in die Wirbelschicht in das Innere der Wirbelbettapparatur reichend ausgebildet sind, da damit die Fluidisierung in dem trichterförmigen Bereich besser kontrollierbar wird. Sind Bereiche vorgesehen, die unabhängig voneinander mit Fluidisierungsgas beaufschlagt werden können, so kann damit in einfacher Weise die Höhe der Wirbelschicht eingestellt werden. In der WO 89/11378 wird eine Vorrichtung mit trichterförmigem Bodenbereich beschrieben, die sich insbesondere als Sendegefäss für von zu Agglomerationen neigenden Feststoffen eignet, da dieser trichterförmige Bereich mit Fluidisierungsgas beaufschlagt werden kann, so dass die Bildung von Agglomeraten weitgehendst unterbunden werden kann. Das Fluidisierungsgas kann dabei in horizontal voneinander getrennte Bereiche über Ringleitungen in unterschiedlicher Menge bzw. Geschwindigkeit eingeleitet werden, mit dem Ziel, das Ausfliessen des Feststoffes aus dem Sendegefäss auch für in bezug auf deren Fliessfähigkeit problematische Feststoffe zu ermöglichen.

Eine erfindungsgemässe Wirbelbettapparatur kann auch mehrere trichterförmige Bereiche aufweisen, die jeweils eigene Auslassöffnungen besitzen, über die der Gas/Feststoff-Strom abfliessen kann. Es wird damit möglich, verschiedene Reaktionsräume gleichzeitig aus einer einzigen Vorrichtung zu beschicken, und das - wenn die einzelnen trichterförmigen Bereiche unabhängig voneinander mit Fluidisierungsgas beaufschlagt werden können - in unterschiedlicher Dosierung - in Abhängigkeit von für den jeweiligen Reaktionsraum vorgegebenen Prozessparametern.

Wird eine - insbesondere nach dem Prinzip der Differentialverwiegung betriebene - gravimetrische Messeinrichtung vorgesehen, so wird die Überprüfung des aus der Wirbelschicht ausfliessenden Feststoffes vereinfacht. Während dieser Bestimmung des ausfliessenden Feststoff-Massenstroms, die sowohl über Gewichtsaufnehmer als auch über Differenzdrucksensoren möglich ist (auch andere Messysteme, wie solche kapazitiver Art oder Prallplatten, sind denkbar), wird vorzugsweise die weitere Einspeisung von Feststoff in die Wirbelbettapparatur unterbunden, jedoch der Druck oberhalb der Wirbelschicht erhöht, um damit die treibende Kraft während des Wiegevorgangs konstant zu halten. Der erhöhte Druck oberhalb der Wirbelschicht überlagert sich dabei dem in der Wirbelschicht herrschenden hydrostatischen Druck.

Wird - vorzugsweise erst nach Beendigung des gravimetrischen Messvorgangs, um diesen frei von Störkräften zu halten - wieder Feststoff in die Wirbelbettapparatur bis zu einer bestimmten Höhe eingespeist und gleichzeitig der Druck oberhalb der Wirbelschicht eingestellt, so kann die treibende Kraft kontinuierlich gemessen und geregelt werden. Um während des neuerlichen Einspeisvorgangs den ausfliessenden Massenfluss konstant zu halten, können einfache Messysteme, wie beispielsweise Biegestäbe oder Dehnungsmessstreifen, vorgesehen werden. Einer - insbesondere speicherprogrammierbaren - Steuereinrichtung werden dazu Messignale zugeführt, die über verschieden angeordnete Drucksensoren verfügbar werden. Steuersignale steuern Ventile, die in den Zuleitungen für das Fluidisierungsgas vorgesehen sind, womit Menge bzw. Geschwindigkeit des in die Wirbelschicht bzw. über die Begasungsdüsen - die im Bereich der Auslassöffnung oder an diese anschliessend vorgesehen sein können - einströmenden Fluidisierungsgases gesteuert werden kann. Über von der Steuereinrichtung verfügbare Steuersignale kann ebenfalls eine für die Zuführung des Feststoffes vorgesehene Einlasseinrichtung und/oder eine in einer Druck- bzw. Saugleitung vorgesehene Gas-Einlasseinrichtung gesteuert werden, über die der Raum oberhalb der Wirbelschicht mit Gas beaufschlagt werden kann.

Da die auszusteuernden, möglichen Schwankungen je nach Verfahrensbedingungen niederfrequenter oder höherfrequenter Natur sein können, wird zu deren Erfassung vorzugsweise eine Siebschaltung vorzusehen sein, so dass hochfrequente Schwankungen insbesondere über die Steuerung von Fluidisierung im Auslassbereich, insbesondere über die an die Auslassöffnung anschliessende Begasungsdüse, ausgesteuert werden, während niederfrequente Schwankungen über die Steuerung der Feststoffeinspeisung, der Einstellung der Wirbelschicht-Höhe und/oder der Grösse des oberhalb der Wirbelschicht herrschenden Drucks ausgeglichen werden.

Die Erfindung wird im folgenden anhand von Zeichnungen beispielhaft beschrieben. Es zeigen:
- Fig.1: eine Prinzipskizze einer Anordnung mit einer Wirbelbettapparatur und einer erfindungsgemässen Dosiervorrichtung;
- Fig.2: einen Schnitt durch eine erfindungsgemässe Wirbelbettapparatur mit einem trichterförmigen Boden;
- Fig.2a: ein Diagramm, das die Abhängigkeit des in einer Wirbelbettapparatur entsprechend Fig.2 herrschenden Drucks in Abhängigkeit von der Höhe zeigt;
- Fig.3: eine Wirbelbettapparatur mit mehreren trichterförmigen Bereichen und
- Fig.4: eine Ausführungsvariante einer Wirbelbettapparatur mit trichterförmigem Bereich.

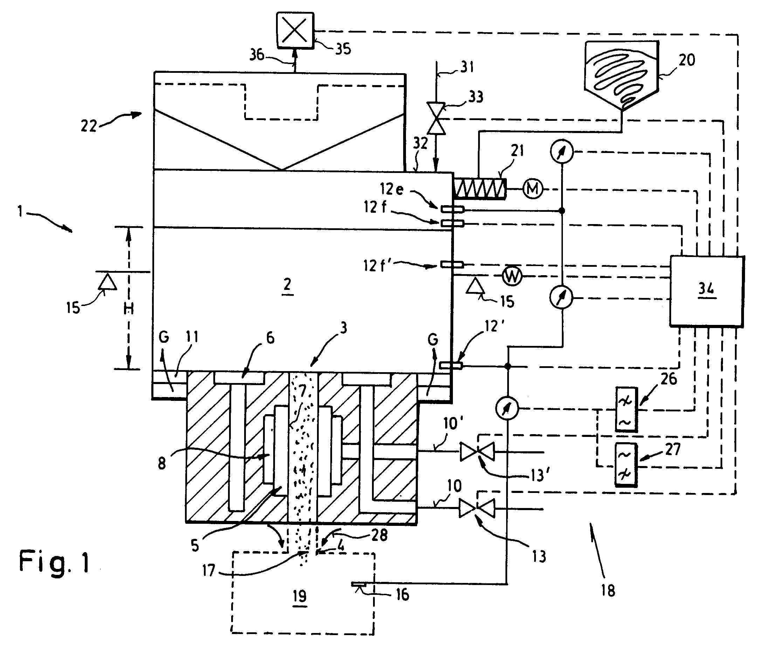

Aus Fig.1 ist in schematischer Darstellungsweise das erfindungsgemässe Prinzip zu erkennen, nach dem ein aus einer Wirbelbettapparatur 1 ausfliessender Gas/Feststoff-Strom 17 über eine Dosiereinrichtung 18 in einen Reaktionsraum 19 eingebracht wird. Der Feststoff wird in Partikelform aus einem Vorratsbehälter 20 beispielsweise über eine Dosierschnecke 21 in die Wirbelbettapparatur 1 eingespeist. Zur möglichst schonenden Förderung der Partikel kann die Dosierschnecke 21 als Hohlspirale ausgebildet sein. Die Drehzahl der Dosierschnecke 21 und der Ort der Einspeisung der Feststoffpartikel ist so vorgewählt, dass der Impuls der aus der Dosierschnecke 21 in die Wirbelschicht 2 eingespeisten Feststoffpartikel möglichst klein gehalten werden kann. Anstelle einer Dosierschnecke können auch andere Einlasseinrichtungen, wie gegebenenfalls ein Kettenförderer, vorgesehen sein.

Für manche Anwendungen mag es wünschenswert sein, wenn über zwei oder auch mehr Einlasseinrichtungen verschiedenartige Feststoffe in die Wirbelbettapparatur 1 eingebracht werden, beispielsweise, wenn diese Feststoffe in der Wirbelschicht 2 gemischt und als zu dosierende Mischung aus ihr ausgetragen werden sollen.

Durch den Boden 11 der Wirbelbettapparatur 1 strömt Fluidisierungsgas G von unten nach oben und wirbelt die eingespeisten Feststoffpartikel unter Bildung einer Wirbelschicht 2 auf. Mit steigender Anströmgeschwindigkeit des Gases lockert sich die Schicht mehr und mehr auf, so dass die Feststoffpartikel in diesem Zweiphasensystem kleinere und grössere Ortswechsel vornehmen können. Ab einer bestimmten Anströmungsgeschwindigkeit, bei der eine Schüttschicht in eine Wirbelschicht übergeht (Lockerungspunkt), ist der Druckabfall in der Schicht annähernd konstant.

Die Gas/Feststoff-Mischung der Wirbelschicht 2 verhält sich weitgehend wie eine Flüssigkeit; über eine Auslassöffnung 3 im Boden 11 der Wirbelbettapparatur 1 kann die in der Wirbelschicht 2 vorliegende Gas/Feststoff-Mischung als Gas/Feststoff-Strom 17 in die Auslaufleitung 4 "ausfliessen" und in den Reaktionsraum 19 eingebracht werden.

Dieses Einbringen in den Reaktionsraum 19 muss in Abhängigkeit von den jeweiligen, im Reaktionsraum 19 herrschenden Bedingungen geschehen können. Wenigstens ein im Reaktionsraum 19 angeordneter Drucksensor 16 liefert Messdaten über die im Reaktionsraum 19 herrschenden Druck-Bedingungen. Ein weiterer Drucksensor 12' ist in der Wirbelschicht 2 angeordnet und bestimmt den in der Wirbelschicht 2 herrschenden Druck in Höhe der Auslassöffnung 3. Im direkten Einzugsbereich der Auslassöffnung 3 sollte keine Druckmessung vorgenommen werden; wesentlich ist die Anordnung des Drucksensors 12' in Höhe der Auslassöffnung 3, was insbesondere bei in die Wirbelschicht 2 hineinragenden Auslasseinrichtungen zu beachten ist. Damit steht der Differenzdruck zur Verfügung, der für die den Ausfluss des Gas/Feststoff-Stroms aus der Wirbelschicht und dessen Eintritt in den Reaktionsraum 19 bewirkende, treibende Kraft bestimmend ist. In Abhängigkeit von Art und Ablauf des Prozesses ändern auch die Bedingungen im Reaktionsraum 19. Soll Feststoff in bestimmter Dosierung zugeführt werden, so kann allerdings über die Bestimmung dieses Differenzdruckes allein dieser Forderung nicht unter allen Bedingungen nachgekommen werden. So können beispielsweise Dichteänderungen des eingespeisten Feststoffes aufgrund von chemischen Prozessen oder auch Entgasungsvorgänge Fehlinformationen verursachen.

Über die Messdaten von Gewichtsmesszellen 15, bzw. anderer Messeinrichtungen, die die Bestimmung des Gas/Feststoff-Massen-Inhaltes des Wirbelbettapparatur 1 ermöglichen, stehen zusätzliche, gravimetrische Parameter zur Verfügung. Die Messung des Gas/Feststoff-Massen-Inhaltes geschieht dabei vorzugsweise nach dem Prinzip der Differentialverwiegung, wobei die Verwiegung in bestimmten, vorwählbaren Zeitintervallen erfolgt, während denen die Einspeisung von Feststoff in die Wirbelbettapparatur 1 über die Dosierschnecke 21 unterbrochen wird. Alternativ zu einer in bestimmten Zeitintervallen vorgenommenen Verwiegung kann diese auch während einem Zeitraum vorgenommen werden, der durch eine vorgegebene obere und eine ebenfalls vorgegebene untere Füllhöhe bzw. -menge in der Wirbelbettapparatur 1 festlegbar st. Diese Füllhöhen können durch entsprechend positionierte Niveaufühler bestimmt werden, vorzugsweise wird jedoch über die gravimetrische Messeinrichtung selbst die Füllmenge überprüft. Um die treibende Kraft während dieses Verwiegevorganges konstant zu halten, wird - bei abnehmender Höhe H der Wirbelschicht 2 - der Druck oberhalb der Wirbelschicht 2 erhöht. Dazu ist eine in die Abdeckung 32 der Wirbelbettapparatur 1 mündende, pneumatische Leitung 31 und eine Durchsatz-Begrenzungseinrichtung 35 in der Gasauslassleitung 36 für das Fluidisierungsgas vorgesehen. Auch über eine solche Durchsatz-Begrenzungseinrichtung 35 allein ist somit eine Steuerung des Druckes über der Wirbelschicht möglich. Ein Ventil 33, oder eine andere regelbare Gas-Einlass/Auslass-Einrichtung, wie beispielsweise ein drehzahlregelbares Gebläse oder eine Saugvorrichtung, wird über die Messignale eines in dem Bereich oberhalb der Wirbelschicht 2 angeordneten Drucksensors 12e gesteuert.

Aus der Wirbelschicht ausgetragene Feinfraktionen werden über eine Staubfilteranordnung 22, vorzugsweise ein Zyklon, abgeschieden und gegebenenfalls wieder in die Wirbelschicht zurückgeführt.

Der aus einer Wirbelschicht ausfliessende Gas/Feststoff-Strom besitzt vorteilhafte Eigenschaften, insbesondere im Hinblick auf Stoff- und Wärmeübergang, wodurch viele Prozesse vereinfacht und beschleunigt werden können. Dies ist natürlich nur dann in idealer Weise gegeben, wenn Struktureigenschaften im ausfliessenden Gas/Feststoff-Strom gewahrt bleiben. Somit stellt sich nicht nur die Aufgabe, den im ausfliessenden Gas/Feststoff-Strom vorliegenden Feststoff quantitativ zu dosieren, sondern dabei auch die Homogenität des Gas/Feststoff-Stroms zu erhalten und gegebenenfalls sogar noch zu erhöhen, d.h. damit - für bestimmte Prozesse - gegebenenfalls weiters eine qualitative Bedingung zu erfüllen.

Dies ist mittels einer sich unmittelbar an die Auslassöffnung 3 anschliessenden Begasungsdüse in Form eines Hohlkörpers 5 möglich. An diese anschliessend kann eine weitere, insbesondere ringförmig ausgebildete, Düse 28 vorgesehen sein, die dem ausfliessenden Gas/Feststoff-Strom Gas koaxial zuführt, ihn sozusagen "ummantelt". Damit wird die mittels des Hohlkörpers 5 erreichbare Stabilität des Gas/Feststoff-Stroms aufrechterhalten.

Symmetrisch zur Auslassöffnung 3 ist eine als zusätzliche Fluidisierungsdüse 6 ausgebildete Begasungsdüse angeordnet, durch die über eine pneumatische Leitung 10 zusätzlich zu dem durch den Boden 11 der Wirbelbettapparatur 1 strömenden Gas (Pfeile G) Fluidisierungsgas in die Wirbelschicht 2 eingebracht wird. Die Fluidisierungsdüse 6 ist hier in Form eines Ringkanals mit porösem Einsatz ausgebildet, wodurch das Gemisch in der Auslassöffnung 3 konzentrisch zusätzlich fluidisiert werden kann. Über solche Fluidisierungsdüsen 6 kann im wesentlichen nur ein Beitrag zur Homogenisierung des in die Auslaufleitung 4 ausfliessenden Gas/Feststoff-Stroms geleistet werden, eine Beeinflussung des Feststoff-Massendurchflusses ist damit nur in sehr geringem Masse möglich, da dann mit dem Einziehen von Blasen gerechnet werden müsste.

Der zylindrische Hohlkörper 5 besitzt eine poröse Wandung 7, die ihrerseits wieder von einem ringförmigen Begasungskanal 8 umgeben ist. Dieser wird über eine pneumatische Leitung 10', die mit der pneumatischen Leitung 10 zu den Fluidisierungsdüsen 6 verbunden sein kann, ebenfalls mit Fluidisierungsgas beschickt - wobei Ventile 13,13', gegebenenfalls auch Wegeventile und/oder Druckbegrenzungsventile, vorgesehen sein können. Aus der EP-A-531 758 sind verschiedene Varianten für die Ausbildung eines solchen Hohlkörpers 5 zu entnehmen, ebenso wie eine detaillierte Beschreibung der damit zur Verfügung stehenden, unterschiedlichen Regelungsmöglichkeiten.

Die über die Differenzdruckmessung verfügbaren Messdaten werden beispielsweise über eine speicherprogrammierbare Steuerung 34 mit eingebautem Softwareregler geführt, die wiederum die Fluidisierung und/oder Begasung des ausfliessenden Gas/Feststoff-Stroms über den Begasungskanal 8 und/oder die Fluidisierungsdüse(n) 6 steuert.

Die den ausfliessenden Feststoffmassenstrom charakterisierenden Messdaten der Gewichtsmesszellen 15 werden ebenfalls über die speicherprogrammierbare Steuerung 34 geführt.

Über die speicherprogrammierbare Steuerung 34 wird die Einspeisung von Feststoff über die Dosierschnecke 21 gesteuert. Insbesondere in den Verwiegungspausen wird damit die Höhe H der Wirbelschicht 2 bzw. deren Inhalt auf einen bestimmten Wert eingestellt, gegebenenfalls durch Niveaufühler 12f, 12f' für das obere und untere Grenzniveau kontrollierbar, und das in den Verwiegungszeiträumen ausgeflossene Feststoff-Material wieder nachgefüllt.

Wie bereits einleitend festgestellt, sind sowohl rasche als auch langsame Schwankungen im austretenden Feststoff-Massenstrom möglich. Jede der oben dargestellten Steuerungsalternativen bzw. deren Kombinationen zeigt eine andere Regelcharakteristik. Eine - beispielsweise ein Tiefpassfilter 26 und ein Hochpassfilter 27 aufweisende - Siebschaltung bewirkt - über die Steuerung 34 -, dass bei langsamen Änderungen die Feststoffzufuhr in die Wirbelbettapparatur 1 und/oder die Zufuhr von Fluidisierungsgas in die Wirbelschicht 2 und/oder die Zufuhr von Gas in den Raum oberhalb der Wirbelschicht 2 nachgeregelt wird, bei raschen Änderungen hingegen die Begasung des durch die an die Auslassöffnung anschliessende, als Hohlkörper 5 ausgebildete Begasungsdüse ausfliessenden Gas/Feststoff-Stroms geändert wird.

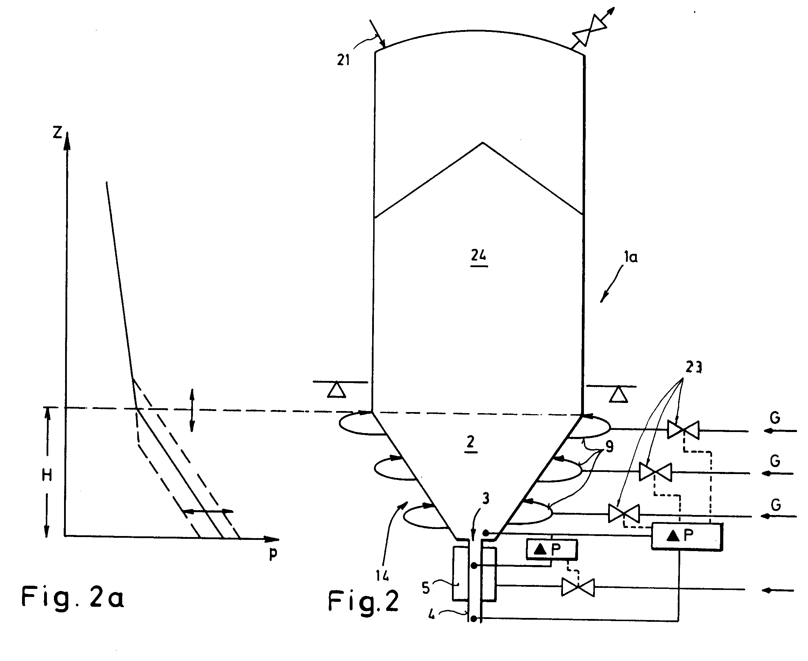

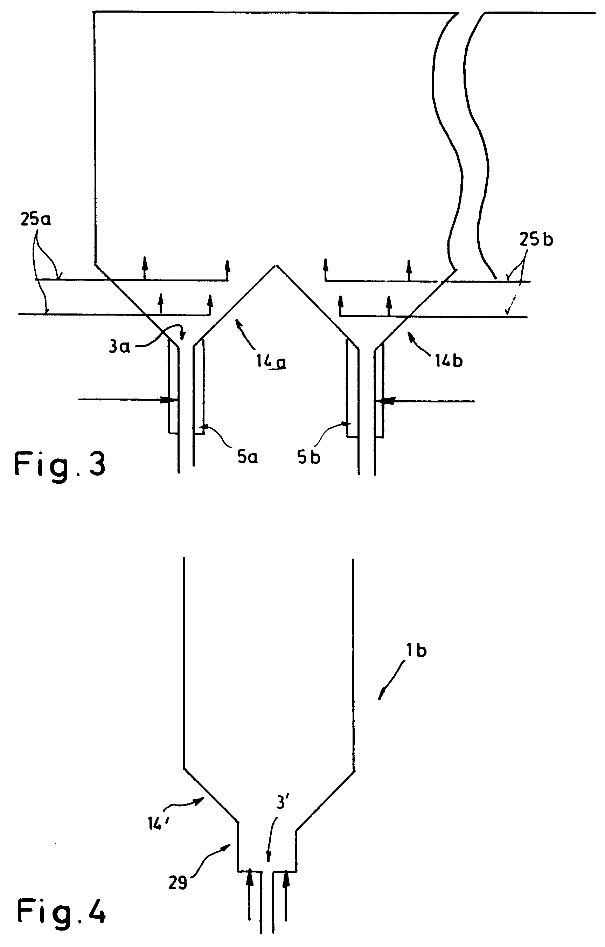

In Fig.2 ist eine Wirbelbettapparatur 1a dargestellt, deren unterer Bereich in Form eines Trichters 14 ausgebildet ist. Feststoff wird über eine Einlasseinrichtung 21 eingebracht, Fluidisierungsgas G wird über Ringleitungen 9 in den Trichter 14 eingeleitet. Anstelle der Ringleitungen können auch in das Innere der Wirbelschicht reichende Leitungen 25 (Fig.3) vorgesehen werden, die eine vorteilhaftere Fluidisierung des in den Trichtern eingebrachten Feststoffes bewirken. Die Wandung des Trichters 14 ist dabei - wenigstens teilweise - beispielsweise entsprechend der aus Fig.1 der WO 89/11378 zu entnehmenden Anordnung - in voneinander getrennte horizontale Bereiche getrennt, die doppelwandig ausgebildet sind und deren innere Wand jeweils gasdurchlässig ist. Damit kann in horizontalen Schichten das Fluidisierungsgas in unterschiedlicher Menge bzw. Geschwindigkeit in den Trichter 14 eingeleitet werden. Dies ist mittels in den Ringleitungen 9 vorgesehenen Ventilen 23 steuerbar. Damit ist eine Möglichkeit gegeben, die Höhe H der Wirbelschicht 2 einzustellen, die hier nach oben von der Feststoffschüttung 24 abgedeckt ist. Die Höhe H der Wirbelschicht 2 hängt in diesem Fall aber auch von der Masse der Feststoff-Schüttung 24 ab, wodurch eine weitere Möglichkeit der Einstellung der Wirbelschichthöhe H gegeben ist.

Wie aus dem Diagramm der Fig. 2a zu ersehen ist, hängt der in der Höhe der Auslassöffnung 3 herrschende Druck von der Höhe der Wirbelschicht 2 ab, der Grenze also zwischen Wirbelschicht 2 und Schüttung 24. Je mehr Fluidisierungsgas zugeführt wird und je mehr somit die Grenze zwischen Wirbelschicht 2 und Schüttung 24 nach oben verschoben wird, desto grösser ist der in Höhe der Auslassöffnung 3 herrschende Druck. Auf diese Weise kann die treibende Kraft variiert werden, wobei der Vorteil auch darin zu sehen ist, dass aufgrund der Querschnittsreduktion weniger Menge an Fluidisierungsgas erforderlich ist. Die Regelung des ausfliessenden Gas/Feststoff-Stroms erfolgt entsprechend der anhand der Fig.1 beschriebenen Weise mit der zusätzlichen Möglichkeit der Ansteuerung der jeweiligen Ventile 23 in den Ringleitungen 9. Wird die Zufuhr von Fluidisierungsgas gestoppt, so ist kein fluidisierter Bereich in der Wirbelbettapparatur 1a gegeben. Der Feststoff liegt als reine Schüttung vor, es findet kein Feststoff-Austrag mehr statt. (In ähnlicher Weise wird der Austrag von Feststoff aus einer Wirbelbettapparatur 1 entsprechend Fig.1 gedrosselt bzw. ganz unterbunden, wenn oberhalb der Wirbelschicht 2 ein entsprechender Unterdruck aufgebaut wird.)

Fig.3 zeigt eine Apparatur, die mehrere trichterförmioge Bereiche 14a, 14b, etc. aufweist. Jedem dieser Trichter 14a, 14b, etc. wird Fluidisierungsgas über eigene Leitungen 25a, 25b, etc. zugeführt. Damit ist für jeden Trichter 14a, 14b, etc. die Höhe des jeweiligen Wirbelschichtbereiches unabhängig einstellbar. Damit kann für jeden Trichter 14a, 14b, etc. der aus den jeweiligen Auslassöffnungen 3a, 3b, etc. ausfliessende Feststoff geregelt werden. Über die den einzelnen Auslassöffnungen 3a, 3b, etc. zugeordneten Begasungsdüsen 5a, 5b, etc. kann in der anhand der Fig.1 beschriebenen Weise Einfluss auf die Homogenität des ausfliessenden Gas/Feststoff-Stroms genommen werden, bzw. können geringe, rasche Schwankungen des Feststoff-Massen-Stroms geregelt werden.

Die Leitungen 25 für das Fluidisierungsgas sind hier als in das Innere der Trichter 14a, 14b, etc. reichende Leitungen ausgebildet. Damit wird eine über das Volumen des Trichters verbesserte Fluidisierung des Feststoffes erreicht.

Die in Fig.4 dargestellte Wirbelbettapparatur 1b unterscheidet sich von der in der Fig. 2 dargestellten dadurch, dass der trichterförmige Bereich 14' an seinem unteren Ende in einen relativ schmalen, zylindrichen Teil 29 mündet, aus dem - über die Auslassöffnung 3' - der Gas/Feststoff-Strom abgezogen wird. Eine solche Wirbelbettapparatur 1b vereinigt in sich Vorteile der üblichen Wirbelbettapparaturen, wie beispielsweise in Fig.1 dargestellt, und der trichterförmigen Ausbildung, wie aus Fig.2 zu ersehen. Der untere zylindrische Teil 29 bietet die Möglichkeit der gezielten Fluidisierung des - wie oben diskutiert - an sich problematischen Auslaufbereichs, während der nach oben sich trichterförmig erweiternde Bereich 14' die Möglichkeit ergibt, schichtweise Fluidisierungsgas unterschiedlicher Menge bzw. Geschwindigkeit zuzuführen, bzw. Wirbelschicht und Schüttung gleichzeitig vorzusehen.

## Patentansprüche

1. Vorrichtung zum Dosieren von in einem Gas/Feststoff-Strom vorliegenden Feststoff aus einer Wirbelbettapparatur (1), in der Gas und Feststoff wenigstens im Bereich wenigstens einer zur Entnahme des Gas/Feststoff-Stroms in jeweils wenigstens eine Auslaufleitung (4) vorgesehenen Auslassöffnung (3) als fliessfähige Mischung in einer Wirbelschicht (2) vorliegen, wobei - unabhängig von Art und Menge des jeweils vorliegenden Feststoffs - Einstelleinrichtungen (6, 8, 21, 34) für die zwischen der Höhe der Auslassöffnung (3) und dem Endbereich der Auslaufleitung (4) wirksame Druckdifferenz vorgesehen sind, **dadurch gekennzeichnet**, dass wenigstens eine Druckdifferenz-Messeinrichtung (34; ΔP) vorgesehen ist (sind), die eine Druckmessstelle (12') - insbesondere knapp - oberhalb des Bodens (11) der Wirbelbettapparatur (1) in Höhe der Auslassöffnung (3) und eine zweite, dem Endbereich der Auslaufleitung (4) zugeordnete Druckmessstelle (16) und gegebenenfalls wenigstens eine weitere Druckmessstelle (12e) in der Wirbelbettapparatur (1) oberhalb des Wirbelbettes (1) umfasst, wobei die Druckdifferenz-Messeinrichtung (34; ΔP) bevorzugt mit den genannten Einstelleinrichtungen (6, 8, 21, 34) verbunden ist.

2. Vorrichtung nach Anspruch 1, dadurch gekennzeichnet, dass über die genannten Einstelleinrichtungen (6, 8, 21, 34) wenigstens die Höhe (H) der Wirbelschicht (2) und/oder der Druck oberhalb der Wirbelschicht (2) einstellbar sind, wobei vorzugsweise diese beiden Einstellungen simultan vornehmbar sind.

3. Vorrichtung nach Anspruch 1 oder 2, dadurch gekennzeichnet, dass wenigstens eine der Auslassöffnung (3) zugeordnete Begasungsdüse (5;6) vorgesehen ist, und dass vorzugsweise wenigstens eines der folgenden Merkmale vorgesehen ist:
a) die wenigstens eine Begasungsdüse (5) ist im Bodenbereich, bevorzugt symmetrisch und im Zentrum des Bodens (11), vorgesehen und als - insbesondere senkrechter - an die Auslassöffnung (3) anschliessender Hohlkörper ausgebildet ist, der eine wenigstens teilweise gasdurchlässige - insbesondere poröse, zweckmässig aus Sintermetall bestehende, - Wandung (7) aufweist und wenigstens teilweise koaxial von einem Begasungskanal (8) umgeben ist;
b) wenigstens eine, insbesondere ringförmige, - gegebenenfalls wenigstens zwei symmetrisch in bezug auf die Auslassöffnung (3) liegende - Begasungsdüse(n) (6) mündet bzw. münden unmittelbar an der Auslassöffnung (3) in die Wirbelbettapparatur (1).

4. Vorrichtung nach einem der vorhergehenden Ansprüche, dadurch gekennzeichnet, dass wenigstens der Boden der Wirbelbettapparatur (1) trichterförmig ausgebildet ist, wobei vorzugsweise voneinander getrennte Bereiche vorgesehen sind, die - gegebenenfalls über Ringleitungen (9) oder über in das Innere der Wirbelbettapparatur (1) reichende Leitungen (25) - unabhängig voneinander mit Fluidisierungsgas beaufschlagbar sind.

5. Vorrichtung nach einem der vorhergehenden Ansprüche, bei der - wenigstens im Bereich des Bodens - mehrere trichterförmig ausgebildete Bereiche (14a,14b) vorgesehen sind, dadurch gekennzeichnet, dass jeder dieser trichterförmigen Bereiche (14a, 14b) unabhängig von den anderen mit Fluidisierungsgas beaufschlagbar ist.

6. Vorrichtung nach einem der vorhergehenden Ansprüche, dadurch gekennzeichnet, dass wenigstens eines der folgenden Merkmale vorgesehen ist:
a) es ist eine der Auslassöffnung (3) zugeordnete, als Hohlkörper (5) ausgebildeten Begasungsdüse vorgesehen und wenigstens eine weitere Druckmessstelle im Hohlkörper (5) angeordnet;
b) es ist eine - insbesondere speicherprogrammierbare - Steuereinrichtung (34) für die Regelung bzw. Steuerung wenigstens eines in wenigstens einer den Boden (11) der Wirbelschichtapparatur (1) mit Fluidisierungsgas beaufschlagenden Druckleitung vorgesehenen Ventils und/oder eines in einer die wenigstens eine Begasungsdüse (5,6) mit Fluidisierungsgas beaufschlagenden Druckleitung (10,10') vorgesehenen Ventils (13,13') und/oder wenigstens einer für die Zuführung des Feststoffes in die Wirbelschicht (2) vorgesehenen Einlasseinrichtung (21) und/oder einer in einer den Raum oberhalb der Wirbelschicht (2) mit Gas beaufschlagenden Druck- bzw. Saugleitung (31) vorgesehenen Gas-Einlass/Auslass-Einrichtung (33) vorgesehen, wobei bevorzugt die Steuereinrichtung (34) eine Siebschaltung (26,27) zum Erfassen von niederfrequenten bzw. hochfrequenten Änderungen umfasst.

7. Verfahren zum Dosieren von in einem Gas/Feststoff-Strom vorliegenden Feststoff, wobei Gas und Feststoffpartikel in eine Wirbelbettapparatur (1) eingespeist werden, darin wenigstens teilweise als Wirbelschicht (2) vorliegen, wonach sie aus der Wirbelbettapparatur (1) über wenigstens eine in wenigstens eine Auslaufleitung (4) mündende Auslassöffnung (3) abgezogen werden, wobei- unabhängig von Art und Menge des jeweils vorliegenden Feststoffs - über Einstelleinrichtungen die zwischen der Höhe der Auslassöffnung (3) und dem Endbereich der Auslaufleitung (4) wirksame Druckdifferenz eingestellt wird, **dadurch gekennzeichnet**, dass der Differenzdruck zwischen Wirbelschicht (2) durch Messung in der Höhe der Auslassöffnung (3) und dem Endbereich der Auslaufleitung (4) gemessen und zur Steuerung der Einstelleinrichtungen herangezogen wird.

8. Verfahren nach Anspruch 7, dadurch gekennzeichnet, dass über die Steuer-Mittel in aufeinander abgestimmter Weise der in der und/oder oberhalb der Wirbelschicht (2) herrschende Druck, der in der Auslaufleitung (4) herrschende Druck, die Höhe (H) der Wirbelschicht (2), der Feststoffaustrag und/oder die Feststoffeinspeisung beeinflusst werden.

9. Verfahren nach Anspruch 7 oder 8, dadurch gekennzeichnet, dass wenigstens eines der folgenden Merkmale vorgesehen ist:
a) es ist eine Wirbelbettapparatur (1) vorgesehen, die mindestens einen - wenigstens im Bereich ihres Bodens - trichterförmig ausgebildeten Bereich (14) aufweist, über dessen Höhe Fluidisierungsgas mit unterschiedlicher Menge bzw. Geschwindigkeit eingebracht wird, gegebenenfalls unabhängig von den anderen trichterförmigen Bereichen (14a,14b);
b) über wenigstens eine der Auslassöffnung (3) zugeordnete Begasungsdüse (5) wird dem Gas/Feststoff-Strom Fluidisierungsgas zugeführt;
c) der Differenzdruck zwischen Wirbelschicht (2) - insbesondere in der Höhe der Auslassöffnung (3) - und dem Raum oberhalb der Wirbelschicht (2) und/oder der Differenzdruck zwischen Wirbelschicht (2) - insbesondere in der Höhe der Auslassöffnung (3) - und der als Hohlkörper (5) ausgebildeten Begasungsdüse wird gemessen, wobei diese Messwerte einer Steuereinrichtung (34) zugeführt werden, die vorzugsweise eine Siebschaltung (26,27) zum Erfassen von niederfrequenten bzw. hochfrequenten Änderungen umfasst.

10. Verfahren nach einem der Ansprüche 7 bis 9, dadurch gekennzeichnet, dass - vorzugsweise in bestimmten Zeitabständen - der Gas/Feststoff-Masseninhalt der Wirbelbettapparatur (1) gravimetrisch - insbesondere nach dem Prinzip der Differentialverwiegung - gemessen wird,
wobei vorzugsweise während des Messvorgangs die Einspeisung von Feststoff in die Wirbelbettapparatur (1) unterbunden, der Druck oberhalb der Wirbelschicht (2) jedoch erhöht wird, wobei bevorzugt die gravimetrischen Messwerte der Steuereinrichtung (34) zugeführt werden
und/oder
- insbesondere im Wechsel zur gravimetrischen Messung - der Feststoff wieder in die Wirbelbettapparatur (1) bis zum Erreichen einer bestimmten Höhe (H) bzw. Menge eingespeist und der Druck oberhalb der Wirbelschicht (2) eingestellt wird.

## Claims

1. A device for the dosing of solid material present in a gas/solid material flow from a fluidised bed apparatus (1) in which gas and solid material is present as a mixture capable of flowing in a fluidised bed (2) in the area of at least one discharge opening (3) provided in at least one discharge line (4) for the discharge of the gas/solid material flow, wherein - independent of type and quantity of the respective solid material in hand - adjusting devices (6, 8, 21, 34) have been provided for the pressure differential active between the level of the discharge opening (3) and the end area of the discharge line (4), characterised in that at least one pressure differential measuring device (34; ΔP) is (are) provided comprising a pressure measuring point (12') - especially just above the floor (11) of the fluidised bed apparatus (1) at the level of the discharge opening (3) and a second pressure measuring point (16) assigned to the end area of the discharge line (4) and, if applicable, at least a further pressure measuring point (12a) in the fluidised bed apparatus (1) above the fluidised bed (1), wherein the pressure differential measuring device (34; ΔP) is preferably connected with the mentioned adjusting devices (6, 8, 21, 34).

2. A device according to claim 1, characterised in that by means of the mentioned adjusting devices (6, 8, 21, 34) at least the height (E) of the fluidised bed (2) and/or the pressure above the fluidised bed (2) are adjustable wherein the two adjustments can be carried out simultaneously.

3. A device according to claims 1 or 2, characterised in that at least one gassing nozzle (5; 6) assigned to the discharge opening (3) is provided and that preferably at least one of the following characteristics is provided:
a) the at least one gassing nozzle (5) is provided in the floor area, preferably symmetrically and in the centre of the floor (11) and constructed as - especially vertical - hollow body following the discharge opening (3) which has an at least partly gas permeable - especially porous, practically consisting of sintered metal - wall (7) and is at least partially coaxially surrounded by a gassing channel (8);
b) at least one, especially annular, gassing nozzle - if applicable, at least two gassing nozzles symmetrically positioned with regard to the outlet opening (3) - ends directly at the discharge opening (3) in the fluidised bed apparatus (1).

4. A device according to one of the preceding claims characterised in that at least the floor of the fluidised bed apparatus (1) is of a funnel shape wherein areas separated from one another have been provided to which fluidising gas can be admitted - if applicable by way of annular lines (9) or lines (25) reaching into the interior of the fluidised bed apparatus (1) - independent of the others.

5. A device according to one of the preceding claims wherein - at least in the floor area - several funnel-shaped areas (14a, 14b) are provided characterised in that fluidising gas can be admitted to each of these funnel-shaped areas (14a, 14b) independent of the others.

6. A device according to one of the preceding claims characterised in that at least one of the following characteristics is provided:
a) a gassing nozzle assigned to the discharge opening (3) constructed as a hollow body (5) and at least an additional pressure measuring point is arranged in the hollow body (5);
b) a - especially memory programmable - control device (34) for the control of at least one valve provided in at least one pressure line admitting fluidising gas to the floor (11) of the fluidised bed apparatus (1) and/or one valve provided in a pressure line (10, 10') admitting fluidising gas to at least one gassing nozzle (5, 6) and/or one inlet device (21) provided for the supply of the solid material in the fluidised bed (2) and/or one pressure or suction line (31) admitting gas to the space above the fluidised bed (2) provided for the gas inlet / discharge device (33) wherein the control device (34) preferably incorporates a filter (26, 27) for registering low-frequency and high-frequency changes.

7. A process for dosing a solid material present in a gas / solid material flow whereby gas and solid material particles are fed into a fluidised bed apparatus (1) wherein they are present at least partly as a fluidised bed (2) after which they are drawn off from the fluidised bed apparatus (1) through at least one discharge opening (3) ending in at least one discharge line (4) while - independent of type and quantity of the solid material in hand - the pressure differential effective between the level of the discharge opening (3) and the end area of the discharge line (4) is adjusted with adjusting devices characterised in that the differential pressure between fluidised bed (2) is measured by measurement at the level of the discharge opening (3) and the end area of the discharge line (4) and utilised to control the adjusting devices.

8. A process according to claim 7, characterised in that the pressure prevailing in and/or above the fluidised bed (2), the pressure prevailing in the discharge line (4) the height (H) of the fluidised bed (2), the solid material discharge and/or the solid material supply are influenced by the means of control in a co-ordinated manner.

9. A process according to claims 7 or 8 characterised in that at least one of the following characteristic features are provided:
a) a fluidised bed apparatus (1) is provided having at least one - at least in its floor area - funnel-shaped area (14), above the height of which fluidising gas is admitted at different quantity and velocity, if applicable independent of the other funnel-shaped areas (14a, 14b);
b) fluidising gas is supplied to the gas/solid material flow through at least one gassing nozzle (5) assigned to the discharge opening (3);
c) the differential pressure is measured between fluidised bed (2) - especially at the height of the discharge opening (3) - and in the space above the fluidised bed (2) and/or the differential pressure between fluidised bed (2) - especially at the height of the discharge opening (3) - and the gassing nozzle constructed as hollow body (5) wherein these measured values are supplied to a control device (34) which preferably incorporates a filter (26, 27) for registering low-frequency and high-frequency changes.

10. A process according to one of the claims 7 to 9 characterised in that - preferably at certain intervals - the gas/solid material mass contents of the fluidised bed apparatus (1) is measured gravimetrically - especially according to the principle of differential weighing
while preferably during the measuring process the feed of solid material in the fluidised bed apparatus (1) is interrupted but the pressure above the fluidised bed (2) is increased, while preferably the gravimetric measured values are supplied to the control device (34) and/or
- especially alternating with the gravimetric measurement - the solid material is again fed into the fluidised bed apparatus (1) until a certain height (H) or quantity has been reached and the pressure above the fluidised bed (2) has been adjusted.

## Revendications

1. Dispositif destiné au dosage d'une matière solide contenue dans un flux de gaz/matière solide et provenant d'un appareillage à lit fluidisé dans lequel au moins à la hauteur d'au moins un orifice de sortie (3) prévu dans respectivement au moins une conduite de décharge (4) et destiné au prélèvement du flux de gaz/matière solide, le gaz et la matière solide se présentent dans une couche fluidisée (2) sous la forme d'un mélange coulant, des dispositifs (6, 8, 21, 34) étant prévus pour régler la pression différentielle effective entre le niveau de l'orifice de sortie (3) et l'extrémité de la conduite de décharge (4), ce indépendamment de la nature et de la quantité de la matière solide en présence, caractérisé en ce qu'on a prévu au moins un système de mesure (34; ΔP) de la pression différentielle comprenant un point de mesure de pression (12') - notamment situé légèrement - au dessus du fond (11) de l'appareillage à lit fluidisé (1) à la hauteur de l'orifice de sortie (3), un second point de mesure de pression (16) disposé à l'extrémité de la conduite de décharge (4) et le cas échéant, au moins un autre point de mesure de pression (12e) situé dans l'appareillage à lit fluidisé (1) au dessus du lit fluidisé (1), le système de mesure (34; ΔP) de la pression différentielle étant de préférence connecté avec les éléments de réglage (6, 8, 21, 34).

2. Dispositif selon la revendication 1 caractérisé en ce que les dispositifs de réglage (6, 8, 21, 34) mentionnés permettent d'ajuster au moins la hauteur (H) de la couche fluidisée (2) et/ou la pression au dessus de cette couche (2), ces deux réglages étant de préférence exécutables en même temps.

3. Dispositif selon la revendication 1 ou 2 caractérisé en ce qu'on a prévu au moins une tuyère d'alimentation en gaz (5;6) affectée à l'orifice de sortie (3) et en ce qu'on a prévu de préférence au moins une des caractéristiques suivantes:
a) la tuyère d'alimentation en gaz (5) est prévue dans la zone de fond, de préférence symétriquement au fond (11) et en son centre et a la forme d'un corps creux contigu - notamment verticalement - à l'orifice de sortie (3), ce corps creux présentant une paroi (7) au moins partiellement perméable au gaz, paroi (7) notamment poreuse et réalisée en métal fritté, et étant entouré de manière coaxiale et au moins partiellement par un canal d'alimentation en gaz (8);
b) au moins une tuyère d'alimentation en gaz (6), notamment annulaire, - le cas échéant, au moins deux tuyères (6) disposées symétriquement par rapport à l'orifice de sortie (3) - débouchent dans l'appareillage à lit fluidisé (1) directement à la hauteur de l'orifice de sortie (3).

4. Dispositif selon l'une des revendications précédentes caractérisé en ce qu'au moins le fond de l'appareillage à lit fluidisé (1) est en forme d'entonnoir alors qu'on a prévu des zones de préférence isolées les unes des autres que du gaz de fluidification peut balayer indépendamment les unes des autres, le cas échéant par l'intermédiaire de conduites annulaires (9) ou de conduites (25) débouchant à l'intérieur de l'appareillage à lit fluidisé (1).

5. Dispositif selon l'une des revendications précédentes sur lequel, au moins au niveau du fond, on a prévu plusieurs zones (14a, 14b) en forme d'entonnoir, caractérisé en ce que du gaz de fluidification peut balayer chaque zone en forme d'entonnoir (14a, 14b) indépendamment des autres zones.

6. Dispositif selon l'une des revendications précédentes caractérisé en ce qu'on a prévu au moins l'une des caractéristiques suivantes:
a) on a prévu une tuyère d'alimentation en gaz en forme de corps creux (5) affectée à l'orifice de sortie (3) et disposé dans le corps creux (5) au moins un autre point de mesure de la pression;
b) on a prévu un dispositif de commande (34) - notamment par programme enregistré - pour le réglage et la commande d'au moins une soupape prévue dans au moins une conduite forcée injectant du gaz de fluidification sur le fond (11) de l'appareillage à lit fluidisé (1) et/ou d'une soupape (13,13') prévue dans au moins une conduite forcée (10,10') injectant du gaz de fluidification dans au moins une tuyère d'alimentation en gaz (5,6) et/ou d'un dispositif d'admission (21) prévu pour l'amenage de la matière solide dans la couche fluidisée (2) et/ou d'un dispositif d'admission / de sortie de gaz (33) prévu dans une conduite forcée ou une conduite d'aspiration injectant du gaz dans l'espace situé au dessus de la couche fluidisée (2), ce dispositif de commande (34) comprenant de préférence un circuit de filtrage (26,27) destiné à détecter les modifications à fréquence basse ou haute fréquence.

7. Procédé de dosage d'une matière solide contenue dans un flux de gaz/matière solide, le gaz et les particules de matière solide étant injectés dans un appareillage à lit fluidisé (1), y séjournant au moins partiellement sous la forme d'une couche fluidisée (1) avant d'être aspirés hors de l'appareillage à lit fluidisé (1) à travers au moins un orifice de sortie (3) débouchant dans au moins une conduite de décharge (4), des dispositifs de réglage permettant d'ajuster la pression différentielle effective entre le niveau de l'orifice de sortie (3) et l'extrémité de la conduite de décharge (4) , ce indépendamment de la nature et de la quantité de la matière solide en présence, caractérisé en ce qu'à la hauteur de l'orifice de sortie (3), on mesure la pression différentielle entre la couche fluidisée (2) et l'extrémité de la conduite de décharge (4) et que la valeur ainsi mesurée est utilisée pour commander les dispositifs de réglage.

8. Procédé selon la revendication 7 caractérisé en ce que par l'intermédiaire des moyens de commande, on agit de manière synchronisée sur la pression régnant à l'intérieur et/ou au dessus de la couche fluidisée (2), la pression régnant dans la conduite de décharge (4), la hauteur (H) de la couche fluidisée (2), l'évacuation de la matière solide et/ou l'injection de la matière solide.

9. Procédé selon la revendication 7 ou 8 caractérisé en ce qu'au moins une des caractéristiques suivantes est prévues:
a) on a prévu un appareillage à lit fluidisé (1) présentant au moins à la hauteur de son fond au moins une zone (14) en forme d'entonnoir sur la hauteur de laquelle on apporte du gaz de fluidification en quantité et à débit variables, le cas échéant indépendamment des autres zones en forme d'entonnoir (14a, 14b);
b) du gaz de fluidification est injecté dans le flux de gaz/matière solide par l'intermédiaire d'au moins une tuyère d'alimentation en gaz (5) affectée à l'orifice de sortie (3);
c) on mesure la pression différentielle entre la couche fluidisée (2) - notamment à la hauteur de l'orifice de sortie (3) - et l'espace situé au dessus de la couche fluidisée (2) et/ou la pression différentielle entre la couche fluidisée (2) - notamment à la hauteur de l'orifice de sortie (3) - et la tuyère d'alimentation en gaz en forme de corps creux (5), ces valeurs mesurées alimentant un dispositif de commande (34) qui comprend de préférence un circuit de filtrage (26,27) destiné à détecter les modifications à fréquence basse ou haute fréquence.

10. Procédé selon l'une des revendications 7 à 9 caractérisé en ce qu'on mesure gravimétriquement - notamment selon le principe de dosage différentiel - la masse gaz/matière solide que contient l'appareillage à lit fluidisé, ce de préférence à des intervalles donnés, l'injection de matière solide dans l'appareillage à lit fluidisé étant de préférence interrompue pendant l'opération de mesure alors qu'il y a néanmoins une montée en pression au dessus de la couche fluidisée (2), les valeurs mesurées gravimétriquement alimentant de préférence le dispositif de commande (34) et/ou - notamment après la mesure gravimétrique - la matière solide est réintroduite dans l'appareillage à lit fluidisé (1) jusqu'à une certaine hauteur (H) ou quantité et la pression est régulée au dessus de la couche fluidisée (2).
